# EUROPEAN PATENT APPLICATION

(11) **EP 4 831 583 A1**
(43) Date of publication of application: **28.10.2026**
(21) Application number: 26174599.6
(22) Date of filing: 24.04.2026
(51) Int. Cl.: G01B 11/24, G01B 5/004, G01B 11/00, G06T 7/00, G01B 11/25

(54) **METHOD AND APPARATUS FOR DETECTING THE SHAPE ASSOCIATED WITH A SURFACE**

(30) Priority: 24.04.2025 IT 202500009279
(71) Applicant: QFP S.r.l., 06049 Spoleto (PG) (IT)
(72) Inventor: MAZZETTO, Roberto, 35042 Este (PD) (IT)
(74) Representative: Pelanda, Paolo

(57) **Abstract**

A method for detecting the shape associated with a surface, comprising a step a) of preparing a digital model of the theoretical surface (1), the digital model comprising a plurality of specifications associated with the theoretical surface (1); b) producing a real surface obtained in accordance with the specifications associated with the digital model of the theoretical surface (1) defined in step a), the real surface being provided with at least one crest and at least one depression; c) providing means for acquiring the shape of a surface; d) scanning the real surface produced in step b) through the activation of said acquisition means prepared in step c); e) obtaining a digital model of the scanned surface (6) in step d), the digital model of the scanned surface (6) being provided with crests (2) and depressions (3) in correspondence with the crests (2) and depressions (3) present in the real surface; f) preparing a digital model of an envelope surface (4) obtained starting from the digital model of the scanned surface (6); the envelope surface (4) being suitable to contain at least partially the scanned surface (6) and having at least one point in contact with the scanned surface (6) in correspondence with at least one crest (2); g) processing the digital model of the envelope surface (4) so as to obtain a digital model of a final surface (5) which approximates the scanned surface (6) in accordance with the specifications associated with the surface (1) of the theoretical digital model prepared in step a). An apparatus for detecting the shape associated with a surface.

## Description

### Field of application of the invention

The present invention relates to the technical field of digital metrology and has as its object a method for detecting the shape associated with the surface subjected to measurement.

Furthermore, the present invention also has as its object an apparatus for detecting the shape associated with a surface which implements this method.

### State of the art

**It** is known that many production and industrial sectors require the accurate measurement of objects or manufactured articles in order to verify whether they satisfy conformity requirements.

To satisfy this type of requirements, in recent years technologies have been heavily developed that allow particularly accurate measurements of objects or manufactured articles to be carried out through the use of instruments capable of obtaining a digital three-dimensional model thereof.

For example, in the sector of industrial metrology, instruments have long been known that are capable of detecting the shape and dimensions of an object through the use of a feeler tool, i.e., of a tool configured to come into contact with the external surface of the object in order to detect the measurements and shape thereof.

A different type of instruments which has recently undergone significant development is that comprising three-dimensional scanners.

Indeed, these scanners are provided with a laser source suitable for being irradiated onto the object or manufactured article subjected to measurement. When the laser beam reaches the object, it undergoes a reflection which is then detected by suitable cameras integrated in the scanner.

**It** is possible to determine the shape and dimension of the just-scanned object through the physical characteristics associated with the laser beam reflected by the object itself.

Three-dimensional scanners are generally based on a digital reconstruction of the object obtained through a scan suitable for generating point clouds, i.e., a very dense set of numerical (i.e., digital) points representing virtually the object subjected to measurement and at which the reflection of the laser beam occurs.

Three-dimensional scanners have the undeniable advantage of not requiring contact of a tool with the object subjected to measurement.

For this reason, therefore, through a three-dimensional scanner provided with one or more laser beams, it is possible to perform the three-dimensional scanning of an object when, for example, the latter is already installed in its operational seat or even during its production.

**In** other words, three-dimensional scanners allow scanning of an object to be performed without the latter having to be physically placed inside a measuring machine (as occurs instead with measuring apparatuses using feeler tools).

The combined use of three-dimensional scanners and modeling and graphic design software allows, following the scanning of an object (or of a manufactured article), a digital model of the object/manufactured article to be created which is substantially faithful to the shape and dimensions it has in reality, net of the tolerances associated with the scanner.

Consequently, three-dimensional scanners and modern information technologies allow a user to obtain a three-dimensional model of the real object or manufactured article (i.e., objects that have been actually produced in practice) and to compare the latter with a theoretical (or design) digital model of the same object or manufactured article.

**In** particular, the theoretical digital model represents a three-dimensional virtual representation of the object created by the designer, which is created through the use of suitable computer platforms and software.

This theoretical digital model (for example obtained by means of CAD software or similar graphic virtualization software) presents suitable dimensions and shapes corresponding to the ideal ones and such as to conform to the complex project to which such object or manufactured article refers.

By first creating a digital model of the theoretical object or manufactured article and then a subsequent three-dimensional scan of the actually produced (and obtained in reality) object or manufactured article, it is possible to estimate the differences and/or inconsistencies that the real object/manufactured article presents with respect to the theoretical object/manufactured article.

However, current metrological techniques are not able to go beyond this comparison, providing as main output a feedback on the existence of such inconsistencies and differences.

Consequently, current detection systems exclusively provide information referring to the differences present between the actually produced object/manufactured article and the ideal design specifications, thus indicating an estimate of the conformity associated with such object/manufactured article.

All this heavily affects the quality associated with the real product/manufactured article which will subsequently be used to create, together with other components, a complex project or equipment.

**In** this sense, such a limit is more pronounced when the object to be produced has stringent constraints on the dimensions, as well as on the shape associated with its external surface (which must often respect aesthetic constraints or constraints linked to the production process).

Current measurement and verification systems indeed allow the detection of the differences present between the actually produced surface and that existing and associated with the theoretical model; however, an operator is not able to establish which are the actual areas of the real surface in which they will have to intervene to restore geometric/dimensional conformity, nor predict the possible quantity of filler material (for example putty or other similar materials) that they will have to distribute on the real surface in order to modify its shape and dimensions according to what is required by the theoretical digital model.

### Presentation of the invention

The present invention intends to overcome the technical drawbacks mentioned above by providing a method for detecting the shape associated with a surface which is particularly efficient and high-performing.

**In** particular, the main object of the present invention is to provide a method for detecting the shape associated with a surface capable of providing an operator, in addition to the information associated with the dimensional and geometric conformation of the surface, also with additional information referring to the way in which such surface can be modified so as to obtain its conformity with respect to the design data.

A further object of the present invention is to provide a method for detecting the shape associated with a surface capable of providing particularly accurate indications associated with any external products/agents - for example a filler material or the like - which must be distributed on the surface following production.

Another object of the present invention is to provide a method for detecting the shape associated with a surface which is particularly simple to implement for a specialized operator.

A further object of the present invention is to provide a method for detecting the shape associated with a surface which can be implemented on site, without requiring any modification of the surface or its displacement to a dedicated environment.

Another object of the present invention is to provide a method for detecting the shape associated with a surface which has particularly rapid execution times.

Still another object of the present invention is to provide a method for detecting the shape associated with a surface which provides particularly precise data and information both with respect to the geometric shape and dimensions of the surface and with respect to any external agents whose distribution on the surface is envisaged following the execution of the method itself.

These objects, together with others which will be better clarified below, are achieved by a method for detecting the shape associated with a surface of the type according to claim 1.

According to a further aspect of the present invention, an apparatus for detecting the shape associated with a surface of the type according to claim 11 is provided.

### Brief description of the drawings

The advantages and characteristics of the present invention will clearly emerge from the following detailed description of some preferred but non-limiting configurations of a method for detecting the shape associated with a surface with particular reference to the following drawings:
- **Figure** 1 comprises a cross-sectional view of a schematization of the surfaces defined by the present method such as, the theoretical surface, the scanned surface, the envelope surface and the final surface;
- **Figure** 2 is an enlarged view of a portion of the surfaces schematically indicated in Figure 1.

### Detailed description of the invention

The present invention relates to a method for detecting the shape associated with a surface.

In particular, the present method can be applied to a surface of any shape and material. As will be better understood below in the present description, the method forming the object of the present invention can be implemented in very different technical fields but sharing the need to detect the actual shape of a surface to understand whether it conforms or not to the design data. Indeed, as will be better described below, the present method allows generating a digital model of a final surface which takes into account the initial theoretical model and the surface actually made in practice, but which at the same time allows finding the right compromise between the characteristics of both. Moreover, this final surface will provide the operator with information to promote a targeted modification of the theoretical surface so as to approximate it in the best possible way to the constraints originally contained in the theoretical model.

In the application example described here, the method being described is applied to the sector of watercrafts to detect the shape of the hulls that make up the boat.

However, the naval field represents only one of the various technical fields in which it can be advantageous to implement the present method. The latter, indeed, can be easily applied also in different technical fields such as, for example, any industrial field which provides for the preparation of a certain surface whose conformity of shape with respect to a theoretical model is of non-negligible importance.

Similarly, the construction sector also lends itself to allowing an application of the present method when the need arises to detect the characteristics of a wall surface or other similar surfaces.

As will be better clarified below, the main advantage obtainable through the application of the present method is that of determining in a particularly precise manner the shape discrepancies that a surface presents with respect to the theoretical model. The method, moreover, allows reconstructing, starting from the detection of a real surface, a new surface which approximates the specifications present in the theoretical model and which allows the operator to estimate the differences that exist between the latter surface and the real one.

Conveniently, the method provides for at least the execution of the following steps:
a) preparation of a digital model of the theoretical surface, this theoretical digital model comprising a plurality of specifications associated with the surface;
b) production of a real surface obtained in accordance with the specifications indicated in the theoretical model, the real surface being provided with crests and depressions with respect to the surface defined by the theoretical model;
c) provision of means for acquiring the shape of a surface;
d) scanning the real surface produced in step b) with the acquisition means provided in step c);
e) obtaining a digital model of the scanned surface in step d), this digital model of the scanned surface being provided with crests and depressions corresponding to the crests and depressions present in the real surface;
f) preparation of a digital model of an envelope surface obtained starting from the digital model of the scanned surface; the envelope surface is suitable to contain completely or partially the scanned surface and is provided with points placed in contact with at least one crest present in the digital model of the scanned surface;
g) processing the digital model of the envelope surface to obtain a digital model of a final surface which satisfies (and therefore approximates) the specifications associated with the surface of the theoretical digital model.

The steps set out above are better described below, with particular attention to the purposes that these steps present in the method forming the object of the present invention, the purpose of which is to detect the shape associated with a surface subjected to investigation and/or evaluation.

### Step a)

Step **a)** of the present method provides for the preparation of a digital model of the theoretical surface; this model further comprises a plurality of specifications associated with this surface. This step a) can be executed by a technical designer or by any figure capable of creating a digital model of the theoretical surface.

In the context of the present invention, with the expression *"digital model"* is meant the virtual representation of an object (in the specific case of a surface) made by means of data and dedicated software algorithms. The digital model can be of the static type, i.e., a three-dimensional (3D) modeling of the surface, or dynamic (such as a simulation).

The digital model of the theoretical surface can generally be obtained through the use of suitable simulation and design software.

In particular, the software and programs used to obtain a digital model of a surface are preventively installed on a computer or a server equipped with at least one CPU for processing digital data, a working memory for temporarily or permanently saving such digital data and display means which, starting from the digital data processed by the CPU and/or saved in the working memory, are suitable for reproducing the shapes of the surface so as to make it visible to an operator.

For example, the digital model of the theoretical surface can be obtained through the use of CAD *(Computer-Aided Design)* type software which allow complex surfaces to be created with parametric and direct modeling tools.

It is also possible to obtain the digital model prepared in step **a)** through vector modeling software, i.e., software tools and programs capable of creating and manipulating shapes, curves and surfaces defined by mathematical equations which allow almost infinite scalability of the shapes without loss in the quality of the output displayed by the operator through the display means.

Alternatively, these software/programs may be configured to generate a digital model of the theoretical surface by means of raster graphics, i.e. based on pixels.

The digital model of the theoretical surface is indicated in the figures with the reference number **1.**

Conveniently, the digital model comprises a plurality of specifications associated with the theoretical surface.

The term *specifications,* used in the context of the present method, is intended to refer to the plurality of dimensional and geometric rules associated with the specific theoretical surface defined by the digital model prepared in step **a).**

Some of these specifications (or rules) are reported below, which, however, depending on the particular project to which the theoretical surface refers and therefore cannot be listed here exhaustively:
i. minimum dimension associated with each point of the theoretical surface;
ii. maximum dimension associated with each point of the theoretical surface;
iii. symmetry of the theoretical surface with respect to a possible predetermined symmetry plane **π;**
iv. distance of one or more points of the surface with respect to one or more reference points.

Therefore, from what is set out above, it is possible to identify some of the most common specifications associated with the digital model of the theoretical surface; these specifications refer to the symmetry of the surface with respect to a plane of symmetry, and/or to the maximum dimensions of each point of the surface, and/or to the minimum dimensions of each point of the surface and/or to the distance of one or more points of the surface with respect to one or more reference points.

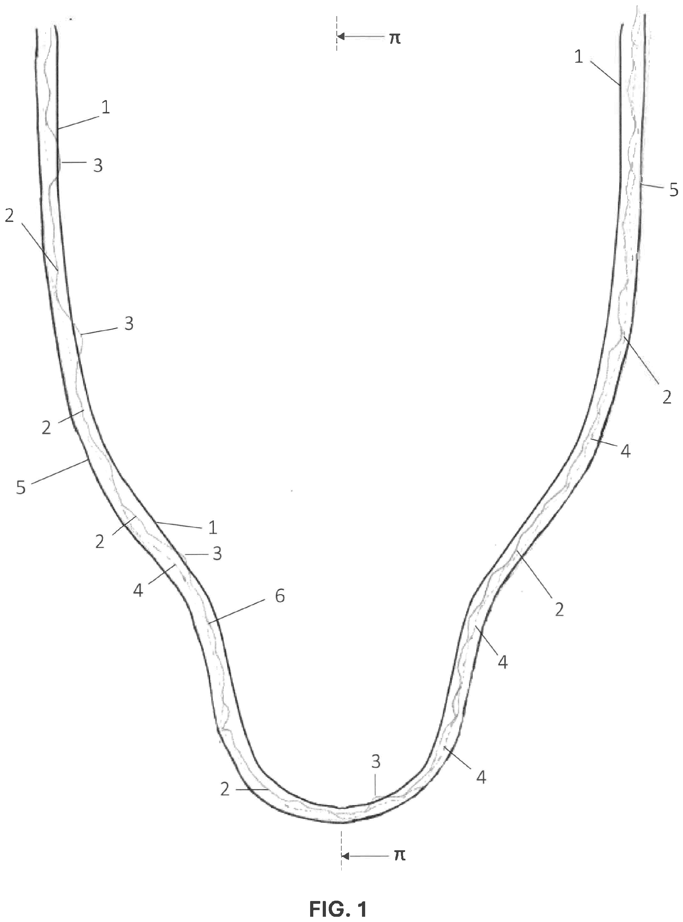

For example, the theoretical surface illustrated in **Figure 1** schematically identifies a section of a portion of a boat's hull.

The theoretical surface 1 illustrated in **Figure 1** has minimum and maximum dimensioning specifications and is substantially symmetrical with respect to the plane of symmetry **π.**

Naturally, the shape and specifications associated with the theoretical surface illustrated in **Figure 1** are exemplary since the present method can be applied to surfaces of any type and dimensions (even not referring to boats or the nautical sector), with which specifications even very different from each other are associated (for example, a surface which has no symmetries and is completely irregular in shape).

### Step b)

During the execution of step **b),** the production of a real surface obtained in accordance with the specifications indicated in the theoretical model is envisaged. In particular, the execution of step b) can be carried out manually by a specialized operator or, alternatively, the same step can be executed by a production process comprising i) manual activities and completely automatic activities - therefore executed with specific machines - or *ii*) exclusively automatic activities. More generally, in step b) a complex manufactured article/product/component will be produced which includes at least the real surface.

The real surface obtained in step **b)** turns out to be an approximation of the theoretical surface prepared in step **a)** and is therefore provided with differences with respect to the surface defined by the theoretical model. These differences can be indicated as crests and depressions with respect to the surface defined in the theoretical model. The *crests* and *depressions* can be considered more or less sudden variations that generate a deviation of the real surface from the theoretical one by an amount that can depend and vary on the way in which this real surface was made. These crests and depressions, therefore, highlight the limits associated with the production process with respect to making a manufactured article (and therefore a real surface) which has a shape and dimensions as compliant as possible with the ideal theoretical model (including the theoretical model of the surface).

In substance, the real surface produced in step **b)** has more or less marked inconsistencies with respect to the specifications associated with the theoretical surface prepared in step **a).**

By definition of the theoretical surface in step a), it does not exist in reality since it refers to a digital model; however, the considerations reported here for the real surface produced in step **b)** are based on the comparison made between the geometric/dimensional characteristics associated with this real surface and the geometric/dimensional characteristics associated with the theoretical surface.

What is reported below, indeed, is based on the conceptual hypothesis of being able to i) produce in reality a surface perfectly conforming to the theoretical one (i.e. which respects in an extremely precise manner the specifications associated with the same), *ii)* promote a comparison (thus in reality) of these two surfaces.

Naturally, the fact of being able to produce the theoretical surface represents an abstraction that cannot be pursued in practice; however, assuming the existence of the theoretical surface as an "existing" surface allows defining some characteristics associated with the real surface prepared in step **b)** which can only be detected by this hypothetical comparison and which will turn out to be useful in the continuation of the present description.

Returning to the real surface indicated in step **b),** it is well known that all works made in reality deviate from the theoretical ideality; the conformity of these works with respect to the ideal design data depends on the evaluation of the deviations, i.e. on whether or not the latter fall within suitable tolerances (also defined during the design stage).

With respect to the field defined by the application of the present method, the tolerances are mainly linked to all the specifications associated with the surface, i.e. the variations in shape and size that the real surface presents with respect to the theoretical surface.

If the theoretical surface were provided with a symmetry, the tolerances associated with the surface obtained at the end of the execution of step **b)** could be such as to still consider compliant a real surface which, although symmetrical, is not exactly superimposable on that defined by the theoretical surface. However, in many cases the real surface might not fall within the design tolerances, due to the fact that it deviates significantly from the theoretical surface (for example when the theoretical surface is symmetrical while the real surface is completely asymmetrical).

The dimensions of the real surface can also deviate from those envisaged for the theoretical surface.

These inconsistencies (often containing crests and depressions), therefore, lead to the production of a real surface that is different from the theoretical surface associated and defined in the digital model prepared in step a).

Due to these factors, the real surface has a different shape with respect to the shape defined by the theoretical surface, even if often these discrepancies are linked to the production process and therefore, in a certain sense, their occurrence is "physiological and endemic" to the production of the real surface.

In the context of the present invention, it is possible to find areas of the real surface which have larger dimensions with respect to the dimensions associated with the theoretical surface.

With respect to the theoretical surface, therefore, these areas of the real surface represent "excesses", i.e. portions of surface that exceed and project over this theoretical surface.

If one then proceeds to superimpose the theoretical surface and the real surface in order to compare them, and making a section of them in correspondence with a predetermined section plane, what is found in the areas of excess is the fact of detecting one or more portions of the real surface located outside the theoretical surface; i.e. portions of the real surface that "project over" the theoretical surface.

For the purposes of the present method, these areas of real surface (or these portions of surface visible from the sections) are called "crests". In substance, therefore, a crest defines a portion of real surface which projects over the theoretical surface (i.e. which is located on the outside of the same).

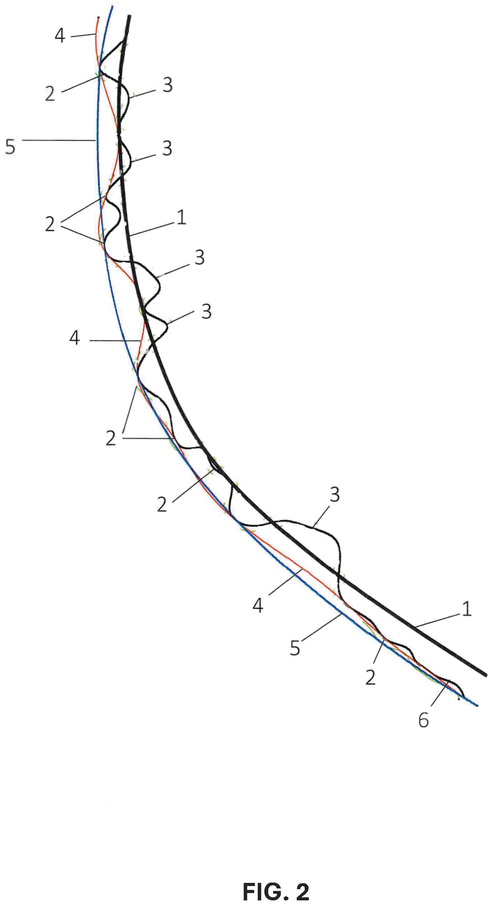

In the configuration illustrated in **Figure** 1 and in **Figure 2****,** the crests are indicated with the reference number 2.

In a similar way to what has already been described for the crests, it is possible to define as depressions all the areas of the real surface which, from a hypothetical superposition of the latter with the theoretical surface, are located inside this theoretical surface and are therefore projected over and exceeded by the latter.

In other words, the depressions of the real surface represent the areas that define a "lack" with respect to the theoretical surface.

Assuming again a section along a predetermined section plane of the theoretical surface and of the real surface mutually superimposed, the portions of the real surface defining the lacks are located inside the theoretical surface and are indicated in the Figures with the reference number 3.

Considering the Figures, it is also possible to define the depressions 3 as the parts of the real surface that lie above the theoretical surface 1 and the crests 2 as the parts of the real surface that lie below the theoretical surface 1.

Conveniently, the real surface can be made in various ways known per se and which are not the subject of the present method.

For example, in the case where the real surface defines the hull of a boat, this surface can be obtained through the joining of metal sheet layers suitably fixed to each other through welding, riveting, etc.

Alternatively, if the real surface constitutes an industrial manufactured article, it can be made of any material following the joining of semi-finished products or as a result of suitable machining carried out on the same through suitable machines (for example machine tools). Again, the real surface can be obtained through 3D printing techniques executed through corresponding printers or similar machines suitable for creating an object through the superposition of layers of molten material (for example polymeric material or polymeric material reinforced with additives).

Whatever the technique used to obtain the real surface, it must however be highlighted that the latter represents the real-life production of the theoretical surface prepared in step a). Consequently, step b) of the present method must be carried out after step a).

### Step c)

The present method further comprises a step c) of preparing means for acquiring the shape of a surface (not illustrated in the Figures).

The acquisition means therefore allow obtaining information on the specifications associated with the real surface prepared in step b).

Thanks to the use of the acquisition means, the information associated with the specifications inherent to the real surface can then be translated into digital format and thus be processed by a CPU.

For this reason, the acquisition means may comprise one or more sensors intended to interact with the real surface in order to determine (or detect) the geometric and/or dimensional characteristics thereof.

In particular, a first configuration of the acquisition means may comprise sensors configured to promote the detection of the characteristics associated with the real surface through contact with the same (for example through the use of a feeler probe or another similar instrument).

Alternatively, the sensors associated with the acquisition means can be configured to detect the characteristics of the real surface in an indirect way, i.e. without promoting any contact with the same (for example through the irradiation/reflection of an electromagnetic signal of a specific wavelength).

Whatever the configuration of the acquisition means, the latter preferably also comprise an electronic control unit intended to process the signal coming from the sensors so as to provide digital data processable by a CPU and containing information associated with the geometric and dimensional characteristics of the real surface.

Conveniently, the means for acquiring the shape of a surface may comprise, in the first place, a laser source suitable for generating a laser beam intended to hit at least partially the real surface, and in the second place, a system for detecting the laser beam emitted by the source but reflected by the real surface.

As is known, it is possible to determine the geometric characteristics of the real surface through the monitoring of some parameters associated with the laser beam during the round trip path that the same makes from the source to the real surface (and vice versa).

For example, it is possible to monitor the time of flight (ToF), the intensity and the phase of the laser beam to determine and obtain the geometric characteristics associated with the surface. The time of flight is only one example among the various techniques used to scan a real surface; these techniques are known per se and will not be commented on below. It is understood, however, that the acquisition means will be able to use any of these techniques.

The detection system associated with the acquisition means allows extracting the characteristics of the real surface starting from the parameters of the laser beam reflected by the same surface **6.**

### Step d)

The present method further comprises a step **d)** of scanning the real surface produced in step **b)** through the acquisition means prepared in step **c).**

The technical effect associated with step **d)** is that of obtaining a plurality of digital data containing information relating to the geometric and/or dimensional characteristics associated with the real surface prepared in step **b).**

Step **d),** therefore, is preparatory to the possibility of creating a digital model of the real surface.

Preferably, during the execution of step **d)** the means for acquiring the shape of the real surface can be configured to generate a point cloud.

In the context of the present invention, the expression *point cloud* is to be associated with the execution of a scan of the real surface through three-dimensional scanning means (such as, for example, the use of a laser scanner of the type described in the previous step).

Indeed, each point of the cloud corresponds to a certain point of the real surface and this point is identified with its three-dimensional coordinates which are acquired and processed by a scanner. Each point of the cloud, therefore, is associated with a certain point of the real surface that was produced during the execution of step **b).**

As will be better clarified below, the execution of step **d)** allows obtaining the modeling of a scanned surface corresponding to the real surface.

The scanned surface will be substantially equivalent to the transposition into digital format of the real surface, net of small tolerances dictated by the use of the scanning systems.

However, in the case of scans carried out with three-dimensional laser scanners, the tolerances will be extremely small and of the order of micrometers. For this reason, step **d)** of scanning the real surface will allow obtaining a particularly faithful model in terms of shape and dimensions with respect to the actual configuration of the latter.

Conveniently, the density of points detected by the scanning means per cm² can be chosen in such a way as to obtain a particularly high resolution of the scanned surface.

For example, the laser scanner can be configured to obtain point clouds of the scanned surface having a density equal to or greater than 100 points per cm².

### Step e)

The present method also comprises a step **e)** of obtaining a digital model of the surface scanned in step **d).** This digital model of the scanned surface is therefore provided with crests and depressions corresponding to the crests **2** and depressions **3** present in the real surface. The real scanned surface is indicated in the Figures with the reference number **6.**

In substance, therefore, step **e)** allows reproducing a digital model (therefore formed by numerical data processable by a CPU) of the real surface produced in step **b).**

Preferably, the digital model of the scanned real surface obtained in step e) is obtained through the interpolation of a point cloud which is generated by the acquisition means during the scanning step **c).** In the context of the present method, the term "interpolate" refers to the numerical operation suitable for promoting the estimation of two or more intermediate values between known data (i.e., the definition of two or more points of the real surface through numerical calculations performed starting from two or more points of the cloud obtained through the activation of the means for acquiring the shape of the surface).

Indeed, since each point of the cloud corresponds to a homologous point of the real surface, through a processing step suitable for appropriately interpolating the points of the cloud it is possible to reconstruct the real surface in digital format, thus obtaining the scanned surface.

Using a high-resolution laser scanner, during the execution of step **e)** it will be necessary to perform the interpolation of point clouds having a particularly high density, in general greater than 100 points per cm².

The digital model of the scanned surface is indicated in the Figures with the reference number **2.**

Preferably, step e) may comprise two respective sub-steps.

In the first place, step **e)** of obtaining a digital model of the scanned surface **6** may comprise a first sub-step **e.1)** of optimizing the points belonging to the point cloud obtained following the execution of the scanning step **d).**

In particular, the present method can be applied to particularly extensive surfaces for which it is not possible to perform a single scan but which require multiple detection passes by the means for acquiring the shape of a surface. At each pass, the means for acquiring the shape can be moved to different positions so as to provide for the acquisition of a different view of the real surface.

In this case, therefore, when the means for acquiring the shape of a surface comprise a three-dimensional laser scanner, following the execution of the scanning step **d)** what is obtained is a plurality of point clouds, each of which is associated with a respective pass (or view) referring to a portion of the real surface. This pass (or view) is carried out by placing the means for detecting the shape in a specific position; different passes carried out on the same real surface, therefore, may comprise different positionings of the means for acquiring the shape.

From the union of all the point clouds it is possible to obtain a comprehensive point cloud associated with the entire scanned real surface **6.**

Some of these points, however, come from different passes of the scanner (different views) which may nevertheless comprise portions of surface in common with each other (for example the points located at a final end of the cloud). In particular, the points associated with the portion of real surface defining the outermost zone of a given pass (or view) of the three-dimensional scanner can be substantially coincident with the points associated with the portion of real surface defining the innermost zone of the subsequent pass (or subsequent view) of the three-dimensional scanner. Each pass (or view) of the three-dimensional scanner is suitable for detecting points of a given portion of real surface, and between two successive passes (or views) there can be a partial superposition of the scanned portions.

In other words, the real surface can be hypothetically subdivided into a series of side-by-side areas (or bands) for each of which a given point cloud is obtained following the pass of the three-dimensional scanner.

When the three-dimensional scanner performs the progressive scanning of the real surface, there is no sharp boundary between the end of one area (or band) and the beginning of the next, and therefore the point clouds obtained for two consecutive areas (or bands) of the real surface may comprise some points in common - or coincident points - which detect the spatial coordinates of the same zone of the real surface.

Furthermore, the laser beam emitted by the scanner source can be reflected by objects other than the real surface but arranged in proximity to the same.

In this case, therefore, the points of the cloud referring to these objects will present spatial coordinates significantly different and inconsistent with respect to those presented by the other points of the cloud referring to the real surface.

Consequently, the point clouds obtained during the various passes of the three-dimensional scanner on the real surface may present inside them a set of inconsistent points which do not belong to this surface.

Conveniently, it is possible to provide for the execution of some sub-steps of step **e).** In particular, during the execution of the first sub-step **e.1)** it is possible to optimize the point clouds so as to:
- remove any points of the cloud that do not belong to the real surface;
- remove any points of the cloud that are redundant and refer to the same zone of the real surface.

Conveniently, step **e)** of obtaining a digital model of the scanned surface may comprise a further sub-step **e.2)** of connecting the points constituting the point cloud obtained following the execution of the scanning step **c).**

Conveniently, sub-step e.2) reproduces the following steps:
- tessellation of the point cloud obtained by the repetition of a predetermined base figure;
- detection of the points overlapping said tessellation;
- union of only the points overlapping said tessellation.
In which by the term "tessellation" is meant the configuration of space obtained following the side-by-side repetition of a basic geometric figure (for example a polygon covering the entire space).

In particular, this sub-step allows reducing the number of points of the cloud so as to recursively reproduce a predetermined geometric structure.

In other words, the points of the overall cloud - which contains all the points of the scanned real surface - are not connected to each other in a random manner, but rather the points undergoing actual interpolation are only those falling within the vertices or sides of a geometric structure having a predetermined shape ideally superimposed on these points. It can therefore be assessed that the points which are actually connected to each other are only those which reproduce this predetermined geometric figure (for example a triangle, a rhombus, a trapezoid, a regular or irregular polygon, etc.).

The points of the cloud that do not fall within the perimeter of the predetermined geometric figure are then eliminated while the points of the cloud actually used to obtain the digital model of the scanned surface are only those falling within the perimeter of the geometric figure.

The geometric figure therefore defines a "mask" and allows selecting suitable points of the cloud (those falling within the perimeter of this mask) and eliminating others.

In this way, therefore, a thinning out of the point cloud is obtained according to a criterion dictated by the shape of the mask, which is selected so as to determine the best compromise between the resolution to be obtained from the scanned surface and the overall number of points to be processed by a CPU.

In other words, the use of a predetermined geometric structure used as a mask allows obtaining the right compromise between the resolution associated with the digital model of the scanned surface and the calculation times and resources required to obtain this digital model.

Conveniently, the digital model of the scanned surface is obtained by joining *(merging)* together a plurality of geometric structures, each of which is configured to join in turn a limited number of points of the cloud.

At the end of sub-steps **e.1)** and **e.2)** it will therefore be possible to obtain a digital model of the scanned surface **6** which corresponds to the numerical transposition of the real surface with a certain resolution. This resolution, moreover, is variable depending on the choice and the minimum and maximum dimensions of the "mask" (basic geometric figure) used in sub-step **e.2).**

### Step f)

The present method further comprises a step **f)** of preparing a digital model of an envelope surface obtained starting from the digital model of the scanned surface.

In particular, the envelope surface is configured to partially or completely contain the scanned surface **6** and has points of contact with the latter in correspondence with at least one crest **2.**

The envelope surface is indicated in the Figures with the reference number **4,** in particular this surface is shown as dashed in Figure **1****.**

Preferably, the envelope surface **4** may present a behavior such as to have contact points with all the crests **2** present in the digital model of the scanned surface **6.**

In other words, therefore, the envelope surface **4** can be considered a "mantle" which comes into contact with at least a part of the crests **2** of the scanned surface **6.**

In particular, in a first embodiment of the method, during the execution of step **f)** the envelope surface **4** can be considered a "mantle" resting on all the crests **2** of the scanned surface **6.**

Alternatively, during the execution of step **f)** the envelope surface **4** can be considered a "mantle" resting on a part of the crests **2** of the scanned surface **6.** This embodiment of the method can be used when the resting of the envelope surface 4 on all the crests **2** could lead to obtaining an envelope surface **4** presenting sudden discontinuities that deviate from the digital model of the theoretical surface by considerable values (in terms of dimensions and/or in terms of shape).

Furthermore, the envelope surface **4** preferably remains outside the scanned surface **6,** i.e. this surface **4** is superimposed on the scanned surface so as to completely contain it inside.

With reference to **Figure 1****,** a hypothetical observer placed outside the real surface **6** (and therefore placed outside a scanned surface ideally superimposed on the real surface) would not have access to these surfaces since the envelope surface **4** is arranged above them.

The purpose of the envelope surface **4** is to "normalize" the course of the scanned surface **6;** the latter, indeed, can present a relatively irregular course due to the presence of the crests **2** and depressions **3.**

In other words, the envelope surface **4** allows defining a more regular course with respect to the scanned surface **6,** while maintaining a shape which, although not being the same as that of the scanned surface **6,** approximates its course with an acceptable tolerance which depends on the irregularities and differences present in this scanned surface **6.**

**Naturally,** the course of the envelope surface **4** depends both on the crests **2** of the scanned surface **6** (on which it rests for at least one of them), and on the extent of the depressions **3.** Indeed, if the crests **2** define the points of "maximum" of the scanned surface **6,** the depressions **3** define the points of "minimum" and the development of the envelope surface **4** is obtained following a numerical interpolation which takes into account both of these extreme points (maximum points / minimum points).

The dimensions of the envelope surface **4** are also different from those of the real surface, without however this envelope surface deviating too much from the latter.

It can therefore be stated that the envelope surface **4** obtained in step **f)** represents an acceptable compromise in normalizing the scanned surface **6** with respect to the crests **2** and depressions **3** present in the latter.

### Step q)

Advantageously, the method also comprises a step **g)** of processing the digital model of the envelope surface **4** in order to approximate this envelope surface **4** to the specifications associated with the surface of the theoretical digital model.

In particular, the processing step **g)** allows modifying the digital model of the envelope surface **4** in order to make it substantially conforming to the specifications originally associated with the surface of the theoretical digital model.

The processing step **g),** therefore, does not generate a real new envelope surface **4,** but rather promotes the modification of the course of the existing one obtained following the execution of step f) so as to appropriately adapt the shape and size thereof. This envelope surface appropriately adapted following step g) will be identified in the continuation of the present description with the expression *final surface* indicated in the Figures with the reference number **5.**

In particular, during the execution of step **g)** the digital model of the envelope surface **4** can be modified so that the latter turns out to be conforming to the specifications defined for the digital model prepared in step **a).**

For example, the modification performed on the digital model of the envelope surface 4 originally prepared in step **f)** can be such as to vary the shape and dimensions of this surface so as to satisfy the same requirements requested for the model of the theoretical surface, as contained in the specifications associated therewith. A non-exhaustive list of these specifications is reported below:
v. minimum dimension associated with each point of the theoretical surface;
vi. maximum dimension associated with each point of the theoretical surface;
vii. symmetry of the theoretical surface with respect to a possible predetermined symmetry plane **π;**
viii. distance of one or more points of the surface with respect to one or more reference points.

Conveniently, both the dimensional quantities indicated in points *v), vi), viii)* and the shape specifications contained in point *vii)* can be expressed through point values or, alternatively, through a range of values delimited by a predetermined minimum value and maximum value.

Therefore, what is obtained at the end of the processing step **g)** is a digital model of a final surface **5** obtained starting from the envelope surface **4** (which has contact points with at least one crest of the scanned surface) but which at the same time has geometric and dimensional characteristics such as to satisfy (or better approximate) the initial specifications associated with the theoretical surface.

In other words, the final surface **5** obtained at the end of the processing step **g)** represents a fictitious surface which however better approximates the theoretical surface when one wants to consider the scanned surface **6** as a starting point.

In this way, therefore, the final surface **5** obtained at the end of the processing step **g)** allows determining a digital model of a surface which, considering the characteristics of the scanned surface **6** (strictly linked to the real surface actually produced), is the one that best approximates the theoretical surface by approximating in the closest way (or fully satisfying) the specifications associated with the latter.

The final surface **5** obtained at the end of step **g)** therefore represents that surface which can be actually obtained in reality by making the appropriate modifications to the real surface prepared in step **b).**

In other words, the final surface 5 obtained at the end of the processing step **g)** represents the surface that could be actually obtained by modifying the real surface prepared in step b); this final surface does not faithfully reproduce the model of the theoretical surface originally prepared in step **a),** but still manages to replicate the specifications associated therewith (in general the specifications regarding shape rules - for example symmetry - and dimensions - for example maximum/minimum).

The digital model obtained at the end of step **g)** defines a theoretical final surface 5 (which does not yet exist in reality), but which as a whole is the one that remains as close as possible to the theoretical model defined in step a) considering the existence of the real surface prepared in step **b).** The digital model of the final surface **5** indeed takes into account the defects present in the real surface (the scanning of which allowed obtaining the envelope surface **4** which was the subject of subsequent processing to obtain this final surface **5).**

The final surface **4,** therefore, represents an optimal compromise with respect to:
- the theoretical model prepared in step **a)**
- the surface actually made in step **b).**

Furthermore, the final surface 6 represents a surface actually obtainable in practice if the real surface underwent a further processing step of modification and adaptation (performed by an operator or in an automated way).

### Further steps

Preferably, the method may comprise a further step **h)** of digital modeling of the volume comprised between the digital model of the scanned surface **6** obtained in step e) and the digital model of the final surface **5** prepared in step **g).**

The technical effect associated with step **h)** is that of creating a digital model of only the volume comprised between the two surfaces respectively defined by the digital model of the scanned surface **6** and by the digital model of the final surface **5.**

What is obtained at the end of step **h),** therefore, is a three-dimensional digital model of the volume comprised between these two surfaces **6, 5.**

Naturally, the volume digitized in step **h)** presents two end surfaces which, being respectively defined by the scanned surface **6** and by the final surface **5** obtained at the end of step **g),** faithfully reproduce the shape and dimensions thereof.

Conveniently, the method may comprise a step **i)** of calculating the distance between the points associated with the digital model of the scanned surface **6** and points associated with the digital model of the final surface **5.**

A step **j)** of comparing the distance calculated in step **i)** with respect to a predetermined reference value may also be envisaged. In particular, during step j) it will be possible to determine whether the distances calculated in step **i)** are greater or smaller than the reference value.

The purpose of step **j)** and step **i)** is to determine the distances that exist between the points belonging, respectively, to the model of the scanned surface **6** and to the model of the final surface **5.**

In particular, this distance can be calculated along the measurement direction connecting a respective point of the scanned surface **6** with a respective point of the final surface **5** determined in the following way:
- the measurement direction passes through the point of the scanned surface **6** so as to hit this surface orthogonally;
- the point of the final surface **5** for which the distance is calculated corresponds to the point of incidence of the measurement direction on the final surface **5.**

By calculating the distances separating the points belonging to the theoretical model of the scanned surface **6** and the points belonging to the theoretical model of the final surface **5** it is possible to evaluate which are the points of the scanned surface **6** that present a minimum distance and a maximum distance from the theoretical surface **5,** or the points that are furthest with respect to a reference value, or else the points that are closest with respect to this reference value.

The reference value can, for example, be chosen so as to determine the ideal distance that the scanned surface **6** should present with respect to the final surface **5.**

The comparison performed in step **j)** between all the distances previously calculated in step i) with this reference value allows determining all the areas of the final surface **5** and of the scanned surface **6** which are too far from each other (distances greater than the reference value) or which are relatively close (distances smaller than the reference value).

For example, obtaining information on the areas of the final surface **5** and scanned surface **6** which are too spaced from each other allows an operator to determine which could be the parts of the real surface requiring an intervention in order to fall within conformity (referred to distance or dimensions) with respect to the theoretical digital model.

The present method may also comprise a step **k)** of processing the volume obtained during the execution of step **h)** and/or the distances calculated in step **i)** in order to determine the amount by weight and/or volume of a filler material intended to be applied onto the real surface made in step **b).**

The filler material calculated during the execution of step **k)** is intended to fill at least partially the volume enclosed in the gap separating the model of the scanned surface **6** and the digital model of the final surface **5.**

Thanks to step **k)** it will therefore be possible to perform a numerical calculation suitable for defining the quantity necessary to completely or partially fill the volume defining the gap between the two digital models of the scanned surfaces **6** and of the final surface **5** with a predetermined filler material.

Returning to the example according to which the present method is applied to the hull of a ship, the filler material can be a putty or other similar material which can be applied onto the real surface made in step **b)** to modify its shape in order to reproduce the final surface **5,** the model of which was processed at the end of step **g).**

Thanks to the preparation of a scanned digital model 6 of the real surface, of a digital model of the final surface **5** (which best approximates the digital model of the theoretical surface) and to the calculation of the volume separating these two surfaces, it is possible to accurately calculate the quantity by weight (or the quantity by volume) of a filler material (for example putty) which must be applied to the real surface to obtain a true realization of the final surface.

One of the advantages that can be obtained from the application of the following method, therefore, is that of *i)* determining a hypothetical surface (i.e. a digital model of the final surface) which best approximates the specifications associated with a theoretical surface, and *ii)* calculating the quantity of a filler material - for example putty - necessary to modify the shape of a real surface in order to reproduce this hypothetical surface, and *iii)* indicating to an operator who will have to distribute this filler material on the real surface on which areas of the latter this filler material must be applied.

Conveniently, during the execution of step **k)** it will be possible to process the volume obtained in step **h)** so as to determine, in addition to the distribution of the filler material with respect to the development of the real surface, also the thickness that this filler material must reach in each area of the real surface prepared in step **b).**

In this way, the operator will be able to receive indications referring to:
- the areas of the real surface in which they must apply the filler material;
- the thickness that the deposition of this filler material must reach in each of these areas in order to modify the shape of the real surface so as to approximate the digital model of the final surface.

### Further considerations referring to the method

Steps **a)** to **k)** described above can be executed automatically by a system equipped with one or more processing units (for example a computer, a server, a complex architecture equipped with a multiprocessor) intended to receive, process and generate digital data such as to be able to define digital models of all the surfaces/volumes/distances indicated above (theoretical surface, scanned surface, envelope surface, final surface, volume comprised between the surface and the scanned surface, distances between the points of the final surface and of the scanned surface).

According to a further aspect of the present invention, an apparatus is provided for detecting the shape associated with a surface; in which this surface has crests **2** and depressions **3.**

This apparatus (not illustrated in the Figures) comprises first of all means for acquiring the shape of a surface.

For example, these means may comprise one or more laser scanners provided with a source suitable for emitting a laser beam and a detection system suitable for receiving the laser beam previously reflected by the surface.

Furthermore, the apparatus may also comprise an electronic processing unit connected to the means for acquiring the shape of a surface.

Conveniently, the acquisition means can be configured to promote the scanning of the surface, more generally digital data associated with the shape thereof. In this way it is possible to obtain a scanned surface **6.**

The electronic processing unit, on the other hand, can be suitable for processing the digital information associated with the shape of the scanned surface **6** by the acquisition means so as to generate further digital data associated with an envelope surface **4.**

The envelope surface **4** will be configured to partially or completely contain inside it the scanned surface **6** (in the same meaning assigned to this expression during the description of the method) and may present contact points with at least one crest **2** present in the digital model of the scanned surface 6 (which corresponds to an actual crest present on the real surface).

The apparatus may further comprise a computer suitable for generating digital data associated with a theoretical model of the surface; This theoretical model comprises also a plurality of specifications associated with the surface itself (dimensional constraints, maximum dimension and minimum dimension, possible symmetry with respect to a predetermined plane of symmetry, etc.).

The electronic processing unit can further be suitable for processing the digital data associated with the scanned surface **6** by means of the acquisition means and digital data associated with the envelope surface **4.**

At the end of this processing, the electronic unit can generate new digital data associated with a three-dimensional model of a theoretical surface **5** obtained based on the envelope surface **4** suitably modified according to *i)* the information contained in the specifications of the digital model of the theoretical surface, and *ii)* the shape and dimensions associated with the scanned surface **6.**

Furthermore, the electronic processing unit will be configured to process the digital model of the scanned surface 6 and the digital model of the final surface 5 to obtain a three-dimensional model of the volume comprised between these two surfaces.

Conveniently, the apparatus may comprise display means operatively connected to the electronic processing unit.

These display means can be suitable for processing at least the digital data associated with the model of the theoretical surface and/or the digital data associated with the scanned surface 6 and/or the digital data associated with the envelope surface 4 and/or the data associated with the final surface **5,** as well as the digital data associated with the three-dimensional model of the volume comprised between the envelope surface and the scanned surface.

Advantageously, the electronic processing unit associated with the apparatus described here can be configured to implement one or more steps of the method for detecting the shape associated with a surface described above.

The display means will allow promoting the display on a screen or on any other device of these digital models so as to allow an operator to appreciate from a graphical point of view all the characteristics associated with these surfaces, volumes and distances.

The present invention can be realized in other variants, all falling within the scope of the claimed and described inventive features; these technical features can be replaced by different technically equivalent elements and the materials used; the shapes and dimensions of the invention can be any, provided they are compatible with its use.

The reference numbers and signs inserted in the claims and in the description have the sole purpose of increasing the clarity of the text and must not be considered as elements limiting the technical interpretation of the objects or processes identified by them.

## Claims

1. A method for detecting the shape associated with a surface, which method comprises the following steps:
a) preparation of a digital model of a theoretical surface (1), said digital model comprises a plurality of specifications associated with the theoretical surface (1);
b) creation of a real surface obtained in accordance with the specifications associated with the digital model of the theoretical surface (1) defined in phase a), said real surface being provided with at least one crest and at least one depression;
c) preparation of means for capturing the shape of a surface;
d) scanning of the real surface created in phase b) by activating the capturing means provided in phase c);
e) obtaining a digital model of the scanned surface **(6)** in said phase d), said digital model of the scanned surface **(6)** being provided with crests **(2)** and depressions **(3)** at the crests **(2)** and depressions **(3)** of said real surface;
f) preparation of a digital model of an envelope surface **(4)** obtained from said digital model of the scanned surface **(6);** said envelope surface **(4)** being suited to contain at least partially the scanned surface **(6)** and having at least one point in contact with said scanned surface **(6)** at least one crest **(2)** of the scanned surface **(6);**
g) processing the digital model of the envelope surface **(4)** in order to obtain a digital model of a final surface **(5)** that approximates said scanned surface **(6)** in accordance with the specifications associated with the surface **(1)** of the theoretical digital model provided in said phase a).

2. Method according to claim 1, **characterized in that** said means for capturing the shape of a surface comprise a three-dimensional scanner equipped with a laser source capable of generating a laser beam suited to at least partially hit the real surface created in said phase b), and a system for detecting the laser beam emitted by said source and reflected by said real surface.

3. Method according to claim 1 or 2, **characterized in that** said means for capturing the shape of the surface are suited to generate a point cloud during the execution of said scanning phase d); each point of said cloud being associated with a specific point of the real surface created in said phase b).

4. Method according to one or more of the preceding claims, **characterized in that** the digital model of the scanned surface **(6)** made in said step e) is obtained by interpolating a point cloud generated by the capturing means during said scanning step c).

5. Method according to one or more of the preceding claims, **characterized in that** said step e) of obtaining a digital model of the scanned surface **(6)** comprises a sub-step **e.1)** of optimising the points belonging to the point cloud obtained in the scanning step c); said sub-step e.1) being suitable to remove any points of said cloud that do not belong to the real surface and/or removing any possible point belonging to the point cloud which referring to the same area of said real surface.

6. Method according to one or more of the preceding claims, **characterised in that** said phase e) of interpolating a digital model of the scanned surface includes a sub-phase e.2) of connecting the points of the point cloud obtained in said scanning step c) and/or to the points of the cloud optimized following sub-phase e.1); said sub-step e.2) being suited to define the digital model of the scanned surface **(6)** by means of the following steps:
- tessellation of the point cloud by repeating a predetermined base-reference figure;
- detection of the points that overlap said tessellation;
- merging of only the points that overlap said tessellation.

7. Method according to one or more of the preceding claims, **characterized in that** the specifications associated with the digital model of the theoretical surface **(1)** refer to the symmetry of said theoretical surface with respect to a predetermined plane of symmetry **(π)** and/or to the maximum dimensions of each point of the theoretical surface **(1)** and/or to the minimum dimensions of each point of the theoretical surface **(1)** and/or to the distance of one or more points of the theoretical surface (1) with respect to one or more reference points.

8. Method according to one or more of the preceding claims, **characterized in that** it comprises a step h) of defining a digital model associated with the volume between the digital model of the scanned surface **(6)** obtained in said step e) and the digital model of the final surface **(5)** obtained in said step processing g).

9. Method according to one or more of the preceding claims, **characterized in that** it comprises a step i) of calculating the distance between the points associated with the digital model of the scanned surface **(6)** and the points associated with the digital model of the final surface **(5),** and a step j) of comparing each distance calculated in said step i) with a predetermined reference value in order to detect when said distances are greater or lesser than said reference value.

10. Method according to one or more of the preceding claims, **characterized in that** it comprises a step k) of processing the volume obtained in step h) and/or the distances calculated in step i) in order to determine the quantity by weight and/or volume of a filling material suited to be applied to the actual surface produced in step b).

11. An apparatus for detecting the shape associated with a real surface, in which the surface has crests and depressions, said apparatus comprising:
- means for capturing the shape of a surface;
- an electronic processing unit connected to said means for capturing the shape of a surface;
wherein said capturing means are suited to promote the scanning of the surface to generate digital data associated with the shape thereof, said scanned surface (6) having crests (2) and depressions (3) at the crests and depressions of the real surface;
wherein said electronic processing unit is suited to:
- prepare a digital model of the theoretical surface (1), said digital model comprising a plurality of specifications associated with the theoretical surface;
- process the digital information associated with the shape of the scanned surface **(6)** to generate digital data associated with an envelope surface **(4);** said envelope surface **(4)** being suited to contain at least partially the scanned surface **(6)** and having points in contact with at least one crest **(2)** of said digital model of said scanned surface **(6);**
- processing said digital model of the envelope surface **(4)** in order to obtain a digital model of a final surface **(5)** that approximates said scanned surface **(6)** in accordance with the specifications associated with the surface **(1).**

12. Apparatus according to claim 11, **characterized in that** said electronic processing unit is adapted to process the digital data associated with the scanned surface **(6)** with said capturing means and the digital data associated with the final surface **(5)** in order to determine further digital data associated with the three-dimensional model of the volume between said scanned surface **(6)** and said final surface **(5).**

13. Apparatus according to claim 11 or 12, **characterized in that** it comprises display means operatively connected to said electronic processing unit and to one or more screens; said display means being suited to process the digital data of at least said theoretical surface **(1),** said scanned surface (6), said envelope surface **(4),** said final surface **(5)** and said three-dimensional model of the volume in order to promote their display on said one or more screens.
